(19) **Europäisches Patentamt / European Patent Office / Office européen des brevets**

(11) **EP 2 557 862 B1**

(12) **EUROPEAN PATENT SPECIFICATION**

(45) Date of publication and mention
of the grant of the patent:
**17.05.2017 Bulletin 2017/20**

(21) Application number: **11797512.8**

(22) Date of filing: **06.04.2011**

(51) Int Cl.:
**H04W 52/18** *(2009.01)*    **H04W 52/34** *(2009.01)*

(86) International application number:
**PCT/CN2011/072471**

(87) International publication number:
**WO 2011/160481 (29.12.2011 Gazette 2011/52)**

(54) **JOINT POWER CONTROL METHOD IN MULTI-USER MULTIPLEXING TECHNIQUE AND APPARATUS THEREOF**

VERBINDUNGSLEISTUNGSSTEUERVERFAHREN IN EINEM MEHRBENUTZER-MULTIPLEXING-VERFAHREN UND VORRICHTUNG DAFÜR

PROCÉDÉ DE COMMANDE DE PUISSANCE COMMUNE DANS UNE TECHNIQUE DE MULTIPLEXAGE MULTI-UTILISATEUR ET DISPOSITIF S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2010 CN 201010213126**

(43) Date of publication of application:
**13.02.2013 Bulletin 2013/07**

(73) Proprietor: **ZTE Corporation**
**Shenzhen City, Guangdong Province 518057 (CN)**

(72) Inventor: **HAO, Ruijing**
**Guangdong 518057 (CN)**

(74) Representative: **Awapatent AB**
**Junkersgatan 1**
**582 35 Linköping (SE)**

(56) References cited:
**WO-A1-03/052963    CN-A- 101 577 959**
**CN-A- 101 583 181**

- **TELEFON AB LM ERICSSON: "Discrete alphas for AQPSK", 3GPP DRAFT; GP-090731 - DISCRETE ALPHA ALPHABET FOR AQPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shenzhen; 20090511, 6 May 2009 (2009-05-06), XP050414882, [retrieved on 2009-05-06]**

- **TELEFON AB LM ERICSSON ET AL: "BTS power control for VAMOS", 3GPP DRAFT; AHG1-090067, BTS POWER CONTROL FOR VAMOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia Antipolis, France; 20091019, 13 October 2009 (2009-10-13), XP050412546, [retrieved on 2009-10-13]**

- **"3rd Generation Partnership Project; Technical Specification Group GERAN; Circuit Switched Voice Capacity Evolution for GSM/EDGE Radio Access Network (GERAN) (Release 8)", 3GPP DRAFT; 45914-820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 25 September 2009 (2009-09-25), XP050911633, Retrieved from the Internet: URL:http://www.3gpp.org/ftp/Specs/2014-12/ Rel-8/45_series/ [retrieved on 2009-09-25]**

- **'Further System Performance Evaluation with FH Scheme for VAMOS' 3GPP TSG GERAN #44 GP-091923 20 November 2009, XP050594592**

- **'Explicit indication of VAMOS Power Level' 3GPP TSG GERAN WG1 GP-091949 19 November 2009, XP050415942**

## Description

Technical Field

The present invention relates to the communication technology field, and in particular, to a method and apparatus for joint power control in multi-user multiplexing technology.

Background of the Related Art

One time slot of the traditional Circuit Switching (CS) service is allocated to one user for usage; in order to increase the channel capacity, that is, to bear more services on the same time-frequency resources, a multi-user multiplexing technology Voice services over Adaptive Multi-user Channels on One Slot (VAMOS) is generated. The technology multiplexes a plurality of users in one time slot and one Absolute Radio Frequency Channel Number (ARFCN).

The document "Discrete alphas for AQPSK 3GPP TSG GERAN # 42WG1 Shenzhen P.R. china May 11th-15th, 2009" discloses a DL power control depending on discrete alphas for AQPSK.

The document CN101583181A discloses a power control method according to a ratio of an intensity of signals of two mobile stations.

The document "BTS power control for VAMOS 3GPP TSG GERAN WG1 Ad Hoc on EGPRS2, GELTE,MUROS,VAMOS, MCBTS,MSR and WIDER 19th -21th Oct, Sophia Antipolis, France" discloses a simulation results of a DL power control depending on discrete alphas for AQPSK.

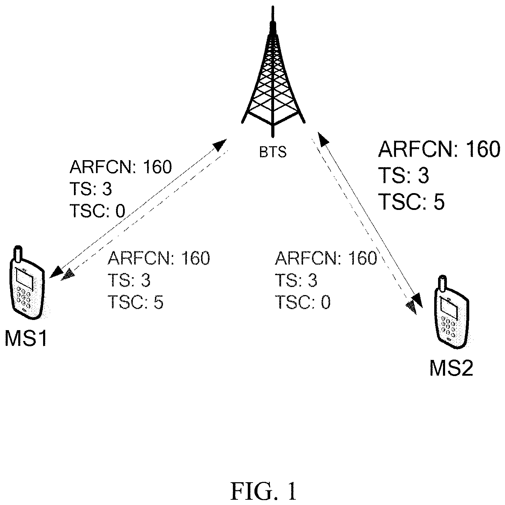

FIG. 1 shows the VAMOS multiplexed by two users, now two sub-channels are provided at this moment, and two MSs work at same Radio Resource, each MS occupies one sub-channel, and the sub-channel is distinguished by orthogonal or approximately orthogonal training sequence. As to the traditional CS voice service, one user occupies one time slot, both the uplink and the downlink use the Gaussian Minimum Shift-frequency Keying (GMSK) modulation mode. And as to the VAMOS, there are two users in one time slot, the downlink base station sends the similar Quadrature Phase Shift Keying (QPSK) signal, and the mobile station regards the signal of other user as the interference and eliminates it through mutually orthogonal training sequence and the interference elimination technology, and then demodulates out its own signal; the two MSs multiplexed in uplink still use the GMSK modulation and send the signal at the same time slot, and the base station side uses the enhanced demodulation algorithm to demodulate the signals of two MSs and distinguishes the users through different training sequences. Wherein, on one hand, the VAMOS power control makes the multiplexed VAMOS user contribute as little as possible to the overall power; and on the other hand, it should guarantee that each user can work normally.

However, the integrity scheme of performing power control on two users multiplexed in same time slot is not provided yet at present.

Summary of the Invention

The technical problem that the present invention requires to solve is to provide a method for joint power control according to claim 1 and an apparatus for joint power control according to claim 6 in multi-user multiplexing technology, to realize the power control for the multiplexing user in the multi-user multiplexing scenario. Further improvements are provided in the dependent claims.

Also provided is a method for joint power control in multi-user multiplexing technology, comprising:

according to reference power values of two Voice services over Adaptive Multi-user channels on One Slot (VAMOS) users, determining an initial power ratio (SCPIR) value of the two VAMOS users; if the initial SCPIR value is out of a set SCPIR range, then adjusting the reference power value of at least one VAMOS user in the two VAMOS users so that the SCPIR value of two VAMOS users after adjustment is in the set SCPIR range, wherein the reference power value of the VAMOS user is determined according to a single user power calculation method.

Preferably, the joint power control comprises downlink initial joint power control, downlink regular joint power control, uplink initial joint power control and uplink regular joint power control.

Preferably, when performing the downlink initial joint power control and the downlink regular joint power control, and when the SCPIR value of two VAMOS users after adjustment is in the set SCPIR range, the method further comprises: if judging that a total power of two VAMOS users after adjustment exceeds a set value, then adjusting the reference power values of the two VAMOS users again, until the total power of the two VAMOS users after adjustment is less than or equal to the set value and the SCPIR value of the two VAMOS users is in the set SCPIR range.

Preferably, when performing the downlink regular joint power control, and when the total power of the two VAMOS users after adjustment is less than or equal to the set value and the SCPIR value of the two VAMOS users is in the set SCPIR range, the method further comprises: if judging that a power adjusting step length of the VAMOS user exceeds an adjusting step length threshold, then adjusting the reference power values of the two VAMOS users again, until the total power of the two VAMOS users after adjustment is less than or equal to the set value and the power adjusting step length of the VAMOS user is less than or equal to the adjusting step length threshold, and the SCPIR value of the two VAMOS users is in the set SCPIR range.

Preferably, when performing the downlink initial joint power control and the downlink regular joint power control, the set SCPIR range is a continuous SCPIR value range, or a discrete SCPIR value set;

when the set SCPIR range is a discrete SCPIR value set, making the SCPIR value of the two VAMOS users after adjustment be in the set SCPIR range refers to:

making the SCPIR value of the two VAMOS users after adjustment equal a SCPIR value most close to the initial SCPIR value in the discrete SCPIR value set.

Preferably, when performing the uplink initial joint power control and the uplink regular joint power control, and when the SCPIR value of the two VAMOS users after adjustment is in the set SCPIR range, the method further comprises: if judging that the reference power value of any one VAMOS user in two VAMOS users after adjustment exceeds a set value corresponding to the VAMOS user, then adjusting the reference power values of the two VAMOS users again, until the adjusted reference power values of two VAMOS users are respectively less than or equal to corresponding set values and the SCPIR value of the two VAMOS users is in the set SCPIR range.

Preferably, when performing the uplink regular joint power control, and when the adjusted reference power values of the two VAMOS users are less than or equal to the corresponding set values and the SCPIR value of the two VAMOS users belongs to the set SCPIR range, the method further comprises: judging whether power adjusting step lengths of the two VAMOS users after adjusting power exceed corresponding adjusting step length thresholds, when the power adjusting step length of any one VAMOS user exceeds the adjusting step length threshold corresponding to the user, then adjusting the reference power values of the two VAMOS users again, so that the adjusted reference power values of the two VAMOS users are respectively less than or equal to the corresponding set values, the power adjusting step lengths of the two VAMOS users are less than or equal to the corresponding adjusting step length thresholds respectively, and the SCPIR value of the two VAMOS users is in the set SCPIR range.

Preferably, when performing the uplink initial joint power control and the uplink regular joint power control, the set SCPIR range is a continuous SCPIR value range.

Also provided is an apparatus for joint power control in multi-user multiplexing technology, comprising a calculation unit and a processing unit, wherein:

the calculation unit is configured to: according to reference power values of two Voice services over Adaptive Multiuser channels on One Slot (VAMOS) users, determine an initial power ratio (SCPIR) value of the two VAMOS users; wherein the reference power value of the VAMOS user is determined according to a single user power calculation method; and

the processing unit is configured to: judge whether the initial SCPIR value is out of a set SCPIR range, and if the initial SCPIR value is out of the set SCPIR range, adjust the reference power value of at least one VAMOS user in the two VAMOS users so that the SCPIR value of the two VAMOS users after adjustment is in the set SCPIR range.

Preferably, the calculation unit is configured to: determine the initial SCPIR value of the two VAMOS users in a downlink initial joint power control process, a downlink regular joint power control process, an uplink initial joint power control process and an uplink regular joint power control process;

the processing unit is further configured to: in the downlink initial joint power control process and the downlink regular joint power control process, set the SCPIR range as a continuous SCPIR value range, or a discrete SCPIR value set; in the uplink initial joint power control process and the uplink regular joint power control process, set the SCPIR range as a continuous SCPIR value range.

Preferably, when the set SCPIR range is the discrete SCPIR value set, the processing unit is configured to: if the initial SCPIR value is out of the set SCPIR range, adjust the reference power value of at least one VAMOS user in the two VAMOS users so that the SCPIR value of the two VAMOS users after adjustment equals a SCPIR value most close to the initial SCPIR value in the discrete SCPIR value set.

Preferably, the processing unit is further configured to:

in the downlink initial joint power control process and the downlink regular joint power control process, and when the SCPIR value of the two VAMOS users after adjustment is in the set SCPIR range, judge whether a total power of the two VAMOS users after adjustment exceeds a set value, and if exceeding the set value, adjust the reference power values of the two VAMOS users again, until the total power of the two VAMOS users after adjustment is less than or equal to the set value and the SCPIR value of the two VAMOS users is in the set SCPIR range;

in the uplink initial joint power control process and the uplink regular joint power control process, and when the SCPIR value of the two VAMOS users after adjustment is in the set SCPIR range, judge whether the reference power values of the two VAMOS users after adjustment exceed corresponding set values respectively, and if the reference power value of any one VAMOS user exceeds the set value corresponding to the VAMOS user, adjust the reference power values of the two VAMOS users again, until the adjusted reference power values of the two VAMOS users are less than or equal to corresponding set values respectively and the SCPIR value of the two VAMOS users is in the set SCPIR range.

Preferably, the processing unit is further configured to:

in the downlink regular joint power control process, and when the total power of the two VAMOS users after adjustment is less than or equal to the set value and the SCPIR value of the two VAMOS users belongs to the set SCPIR range, judge whether a power adjusting step length of the VAMOS user exceeds an adjusting step length threshold, and when the power adjusting step length of the VAMOS user exceeds the adjusting step length threshold, adjust the reference power values of the two VAMOS users again, until the total power of the two VAMOS users after adjustment is less than or equal to the set value and the power adjusting step length of the VAMOS user is less than or equal to the adjusting step length threshold, and the SCPIR value of the two VAMOS users is in the set SCPIR range;

in the uplink regular joint power control process, and when the total power of the two VAMOS users after adjustment is less than or equal to the set value and the SCPIR value of the two VAMOS users is in the set SCPIR range, respectively judge whether power adjusting step lengths of the two VAMOS users exceed corresponding adjusting step length thresholds, when the power adjusting step length of any one VAMOS user exceeds the adjusting step length threshold corresponding to the user, then adjust the reference power values of the two VAMOS users again, until the adjusted reference power values of the two VAMOS users are less than or equal to the corresponding set values respectively, the power adjusting step lengths of the two VAMOS users are less than or equal to the corresponding adjusting step length thresholds respectively, and the SCPIR value of the two VAMOS users is in the set SCPIR range.

The technical scheme of the present invention jointly considers the power demand influencing the multiplexing users and makes the total power as low as possible, and the power of each user can guarantee that both users can work normally, and the power ratio of the two users is adjusted according to the real-time communication state of the user, which optimizes the performance of the whole system.

Brief Description of Drawings

FIG. 1 is a schematic diagram of a VAMOS multiplexed by two users;

FIG. 2 is a main flow chart of a VAMOS downlink power control;

FIG. 3 is a main flow chart of a VAMOS uplink power control.

Illustrative Examples of the Present Invention

The technical scheme of the present invention is described in detail with reference to the accompanying drawings and in combination with illustrative examples hereinafter.
An apparatus for joint power control in multi-user multiplexing technology at least includes a calculation unit and a processing unit, wherein:

the calculation unit is configured to: according to reference power values of two VAMOS users, determine an initial power ratio (SCPIR) value of the two VAMOS users; wherein, the reference power value of the VAMOS user is determined according to a single user power calculation method;

preferably, the calculation unit determines the initial SCPIR value of the two VAMOS users in a downlink initial joint power control process, a downlink regular joint power control process, an uplink initial joint power control process and an uplink regular joint power control process; in the downlink initial joint power control process and the uplink initial joint power control process, the single user power calculation method is an open loop power control method;

the processing unit is configured to: judge whether the initial SCPIR value determined by the calculation unit is out of a set SCPIR range, if the initial SCPIR value is out of the set SCPIR range, adjust the reference power value of at least one VAMOS user in the two VAMOS users so that the SCPIR value of the two VAMOS users after adjustment belongs to the set SCPIR range, wherein, the processing unit, in the downlink initial joint power control process and the downlink regular joint power control process, sets the SCPIR range as a continuous SCPIR value range, or as a discrete SCPIR value set; in the uplink initial joint power control process and the uplink regular joint power control process, it sets the SCPIR range as a continuous SCPIR value range.

Wherein, when the set the SCPIR range is the discrete SCPIR value set, the processing unit makes the SCPIR value of the two VAMOS users after adjustment equal the SCPIR value most close to the initial SCPIR value in the discrete SCPIR value set.

In the preferable scheme, the processing unit, in the downlink initial joint power control process and the downlink regular joint power control process, and when the SCPIR value of the two VAMOS users after adjustment belongs to the set SCPIR range, is further configured to judge whether a total power of the two VAMOS users after adjustment exceeds a set value; if exceeding the set value, then adjust the reference power values of the two VAMOS users again, until the total power of the two VAMOS users after adjustment is less than or equal to the set value and the SCPIR value of the two VAMOS users belongs to the set SCPIR range;

in the uplink initial joint power control process and the uplink regular joint power control process, and when the SCPIR value of the two VAMOS users after adjustment belongs to the set SCPIR range, is further configured to judge whether the adjusted reference power values of the two VAMOS users exceed corresponding set values respectively; if the reference power value of any one VAMOS user exceeds the set value corresponding to the VAMOS user, then adjust the reference power values of the two VAMOS users again, until the adjusted reference power values of the two VAMOS users are less than or equal to corresponding set values respectively and the SCPIR value of the two VAMOS users belongs to the set SCPIR range.

Preferably, in the downlink regular joint power control process, and when the total power of the two VAMOS users after adjustment is less than or equal to the set value and the SCPIR value of the two VAMOS users belongs to the set SCPIR range, the processing unit is further configured to judge whether a power adjusting step length of the VAMOS user exceeds an adjusting step length threshold, and when the power adjusting step length of the VAMOS user exceeds the adjusting step length threshold, adjust the reference power values of the two VAMOS users again, until the total power of the two VAMOS users after adjustment is less than or equal to the set value and the power adjusting step length of the VAMOS user is less than or equal to the adjusting step length threshold, and the SCPIR value of the two VAMOS users is in the set SCPIR range.

in the uplink regular joint power control process, and when the adjusted reference power values of the two VAMOS users are respectively less than or equal to the corresponding set value and the SCPIR value of the two VAMOS users is in the set SCPIR range, the processing unit is further configured to respectively judge whether power adjusting step lengths of the two VAMOS users after adjusting power exceed own corresponding adjusting step length thresholds, when the power adjusting step length of any one VAMOS user exceeds the adjusting step length threshold corresponding to the user, then adjust the reference power values of the two VAMOS users again, until the adjusted reference power values of the two VAMOS users are less than or equal to the own corresponding set values respectively, the power adjusting step lengths of the two VAMOS users are less than or equal to the own corresponding adjusting step length thresholds respectively, and the SCPIR value of the two VAMOS users is in the set SCPIR range.

The process is introduced that the above-mentioned apparatus realizes the joint power control in the scenario that two VAMOS users are multiplexed. Firstly, the reference power of two users are output respectively by the single user power control method, then the initial power ratio (SCPIR) value of the two VAMOS users are determined according to the reference power value of these two VAMOS users; if the initial SCPIR value is out of the set SCPIR range, then it adjusts the reference power value of at least one VAMOS user in two VAMOS users, so that the SCPIR value of the two VAMOS users after adjustment is in the set SCPIR range. Preferably, in the process of performing the power adjustment on the user, on one hand, it needs to make the total power value of the two users be as small as possible (generally the total power value of the two users does not exceed the set value); on the other hand, it should guarantee that each user can work normally, that is, the power allocated to the user should at least reach the target reference power (that is, the rated power when the user works normally).

Preferably, the joint power control process includes VAMOS downlink joint power control and the VAMOS uplink joint power control.

Wherein, the VAMOS downlink joint power control includes the VAMOS downlink initial power control (that is, the VAMOS downlink initial joint power control) and the VAMOS downlink regular power control (that is, the VAMOS downlink regular joint power control). The VAMOS downlink initial power control refers to the initial access power control (that is, the power control of the first frame multiplexed and switched by the VAMOS user), which is implemented based on the single user open loop power control, that is, the power of the two VAMOS users is estimated respectively to obtain the estimation value of the initial power control (it is also called the reference power value hereinafter) by using the open loop power control firstly, and then the estimation value is adjusted according to the SCPIR to obtain the initial access power of the multiplexing user. And the VAMOS downlink regular power control scheme is based on the traditional GSM power control, and the output of the GSM single user power control is regarded as the input of the VAMOS regular power control.

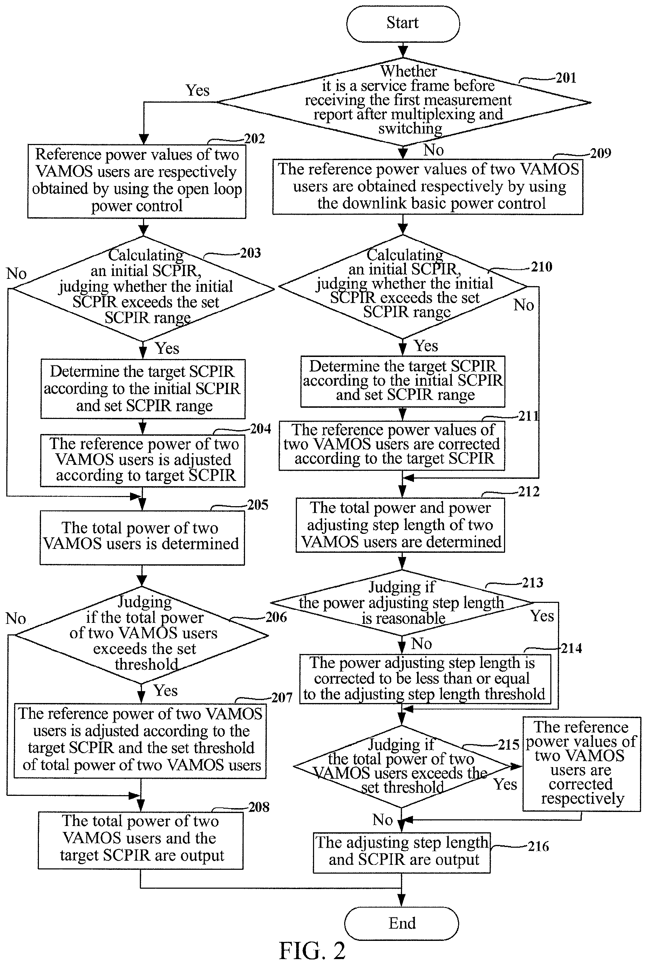

Specifically, the VAMOS downlink joint power control process is shown in FIG. 2, including the following steps:

in step 201: it is judged whether it is the service frame before receiving the first measurement report after the multiplexing and switching; if yes, step 202 is entered, (that is, the VAMOS downlink initial power control flow is entered), otherwise step 209 is entered (that is, the VAMOS downlink regular power control flow is entered);

in step 202: the reference power values of two VAMOS users are respectively obtained by using the open loop power control;

in this step, the reference power value *MS_TX_Power* of the VAMOS user can be obtained according to the following formula:

$$MS\_TX\_Power = MIN\left(MsPowerMax, MS\_TX\_Power - (RxLevelUL - RxLevelOffsetUL)\right)$$

wherein, *MsTxPowerMax* represents the maximum transmission power of the VAMOS user equipment (that is, the target reference initial power);

*RxlevelUL* represents the uplink reception level of the VAMOS user.

*RxlevelOffsetUL* shows the offset value set through the operation maintenance center-radio (OMCR), and the BSS will notify the initial transmission power of the mobile phone to the user equipment in the Assignment Command message, and the offset value can be set in the backstage, and the setting rank is the rank of carrier frequency.

In step 203: the initial SCPIR is calculated according to the reference power values of the two VAMOS users, and it is judged whether the calculated initial SCPIR exceeds the set SCPIR range; if yes, and the target SCPIR is determined according to the initial SCPIR and the set SCPIR range, and step 204 is entered, otherwise, the power value of each VAMOS user equals the reference power value of the VAMOS user, and the calculated initial SCPIR is the target SCPIR, and step 205 is entered;
wherein, setting the SCPIR range can generally be obtained by ways, such as the simulation result or experiment and so on, acknowledged and adopted in the industry, and the set SCPIR range can be a continuous SCPIR value range, or a discrete SCPIR value set. Wherein, when the set SCPIR range is a discrete SCPIR value set, judging whether the calculated initial SCPIR exceeds the set SCPIR range refers that the calculated initial SCPIR does not equal any SCPIR value in the discrete SCPIR value set;
when the set SCPIR range is a continuous SCPIR value range, determining the target SCPIR according to the initial SCPIR and the set SCPIR range refers to determining the target SCPIR according to the boundary value of the SCPIR value range most close to the initial SCPIR, for example, if the lower boundary of the SCPIR value range is most close to the initial SCPIR, then the determined target SCPIR can be greater than or equal to the lower boundary value of the SCPIR value range; if the upper boundary of the SCPIR value range is most close to the initial SCPIR, then the determined target SCPIR can be less than or equal to the upper boundary value of the SCPIR value range;
when the set SCPIR range is a discrete SCPIR value set, determining the target SCPIR according to the initial SCPIR and the set SCPIR range refers to determining a SCPIR value most close to the initial SCPIR in the discrete SCPIR value set as the target SCPIR. In the preferable scheme, when determining the target SCPIR according to the initial SCPIR and the set SCPIR range, a smaller SCPIR value in the two SCPIR values most close to the initial SCPIR in the discrete SCPIR value set is determined as the target SCPIR. In step 204: the reference power of the two VAMOS users is adjusted according to target SCPIR;
in this step, the reference power values of the two VAMOS users can be corrected respectively according to the target SCPIR; in the preferable scheme, it can also adjust the reference power value of at least one VAMOS user therein according to the target SCPIR.

In step 205: the total power of the two VAMOS users is determined;

In step 206: it is judged whether the total power of the two VAMOS users exceeds the set threshold, if yes, step 207 is entered; otherwise step 208 is entered;

In step 207: the reference power of the two VAMOS users is adjusted according to the target SCPIR and the set threshold of the total power of the two VAMOS users, to guarantee that the total power of the two VAMOS users after adjusting power is less than the set value, and the SCPIR of the two VAMOS users is equal to the target SCPIR;

In step 208: the total power of the two VAMOS users and the target SCPIR are output, and the flow ends;

in step 209: the reference power values of the two VAMOS users are obtained respectively by using the downlink basic power control;

in step 210: the initial SCPIR of the two VAMOS users is calculated according to the reference power values of the two VAMOS users, and it is judged whether the calculated initial SCPIR exceeds the set SCPIR range; if yes, the target SCPIR is determined according to the initial SCPIR and the set SCPIR range, and step 211 is entered; otherwise, the power value of each VAMOS user is the target reference initial power value of the VAMOS user, and the calculated initial SCPIR is the target SCPIR, and step 212 is entered;

in step 211: the reference power values of the two VAMOS users are corrected according to the target SCPIR;

in this step, the reference power values of the two VAMOS users can be corrected respectively according to the target SCPIR. In the preferable scheme, it can also adjust the reference power value of at least one VAMOS user therein according to the target SCPIR.

In step 212: the total power and the power adjusting step length of the two VAMOS users are determined;

in step 213: it is judged whether the power adjusting step length is reasonable, that is, whether it exceeds the adjusting step length threshold, if yes, (that is, it exceeds the adjusting step length threshold), then step 215 is entered; otherwise step 214 is entered;

in this step, the related adjusting step length threshold is the adjusting step length threshold corresponding to the total power of the two VAMOS users.

In step 214: the power adjusting step length is corrected to be less than or equal to the adjusting step length threshold;

in step 215: it is judged whether the total power of the two VAMOS users exceeds the set threshold; if yes, the reference power values of the two VAMOS users are corrected respectively according to the target SCPIR and the set threshold of the total power of the two VAMOS users, until the total power of the two VAMOS users is less than the set threshold, and step 216 is entered; otherwise step 216 is entered directly;

in step 216: the adjusting step length and the SCPIR are output, and this flow ends.

The VAMOS uplink joint power control includes the VAMOS uplink initial power control (that is, the VAMOS uplink initial joint power control) and the VAMOS uplink regular power control (that is, the VAMOS uplink regular joint power control). The VAMOS uplink initial power control refers to the initial access power control (that is, the power control of the first frame multiplexed and switched by the VAMOS user), which is implemented based on the single user open loop power control. It estimates the initial access power of the multiplexing user respectively, and limits the power ratio of the two users by using the constraint condition of the SCPIR so that the power ratio does not exceed the threshold. The VAMOS uplink regular power control is on the basis of the single user power control, and the constraint condition of the SCPIR is used to limit the power ratio of the two users to make it not exceed the threshold.

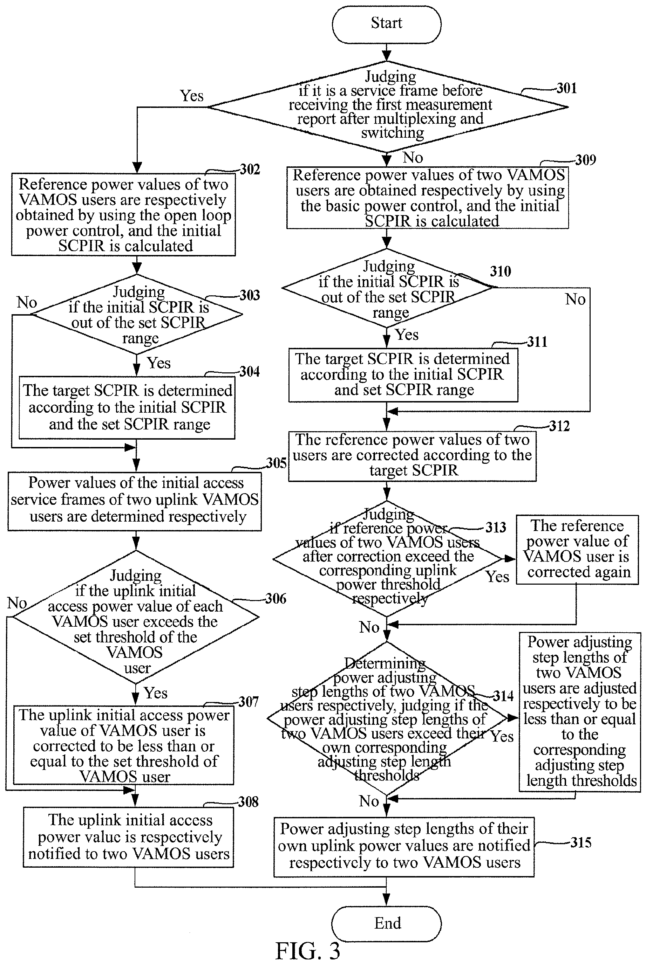

Specifically, the VAMOS uplink joint power control process is shown in FIG. 3, including the following steps:

in step 301: it is judged whether it is the service frame before receiving the first measurement report after the multiplexing and switching; if yes, step 302 is entered, (that is, the VAMOS uplink initial power control flow is entered), otherwise step 310 is entered (that is, the VAMOS uplink regular power control flow is entered);

in step 302: the reference power values of two VAMOS users are respectively obtained by using the open loop power control (it is the uplink initial access power value in the VAMOS uplink initial power control process), and the initial SCPIR is calculated;

in this step, the reference initial power value *RTS_TX_Power* of the VAMOS user can be obtained according to the following formula:

$$BTS\_TX\_Power = MIN(BtsTxPowerMax, BTS\_TX\_Power - (RxLevelDL - RxLevelOffsetDL))$$

wherein, *RtsTxPowerMax* is the maximum transmission power calculated according to the parameters, such as the receiving sensitivity of the terminal and the BTS, the maximum transmission power of the terminal and so on, which can be set through the backstage;

*RxlevelDL* represents the downlink reception level of the user equipment;

*RxlevelOffsetDL* represents the offset value, and the offset value can be set in the backstage, and the setting rank is the rank of carrier frequency.

In step 303: it is judged whether the initial SCPIR is out of the set SCPIR range; if yes, and step 304 is entered, otherwise, the initial SCPIR is regarded as the target SCPIR, and step 305 is entered;
preferably, the set SCPIR range is a continuous SCPIR value range in the uplink joint power control process.
in step 304, the target SCPIR is determined according to the initial SCPIR and the set SCPIR range;
wherein, when the set SCPIR range is a continuous SCPIR value range, determining the target SCPIR according to the initial SCPIR and the set SCPIR range refers to determining the target SCPIR according to the boundary of the SCPIR value range most close to the initial SCPIR, for example, if the lower boundary of boundaries of the SCPIR value range is most close to the initial SCPIR, then the determined target SCPIR can be greater than or equal to the lower boundary value of the SCPIR value range; if the upper boundary of the SCPIR value range is most close to the initial SCPIR, then the determined target SCPIR can be less than or equal to the upper boundary value of the SCPIR value range;
In step 305: the reference power values of the two VAMOS users are corrected according to the target SCPIR (it is the uplink initial access power value in the present embodiment);
in this step, the reference power values of the two VAMOS users can be corrected respectively according to the target SCPIR; in the preferable scheme, it can also adjust the reference power value of at least one VAMOS user therein according to the target SCPIR. Then, the power values of the initial access service frames of the two uplink VAMOS users are determined respectively (that is, the service frame before the network side receives the first measurement report sent by the uplink user);
in step 306: it is judged whether the uplink initial access power value of each VAMOS user exceeds the set threshold of the VAMOS user, if yes, step 307 is entered; otherwise step 308 is entered;
in step 307: the uplink initial access power value of the VAMOS user is corrected to be less than or equal to the set threshold of the VAMOS user, and it guarantees that the SCPIR of the two VAMOS users after modification is same as the target SCPIR;
in step 308: the uplink initial access power value is notified respectively to the two VAMOS users, and the flow ends;
in step 309: the reference power values (it is the uplink power value in the VAMOS uplink regular power control process) of the two VAMOS users are obtained respectively by using the basic power control, and the initial SCPIR is calculated;
in step 310: it is judged whether the initial SCPIR is out of the set SCPIR range; if yes, then step 311 is entered; otherwise, the initial SCPIR is the target SCPIR, and step 312 is entered;
in step 311: the target SCPIR is determined according to the initial SCPIR and the set SCPIR range;
in this step, when the set SCPIR range is a continuous SCPIR value range, determining the target SCPIR according to the initial SCPIR and the set SCPIR range refers to determining the target SCPIR according to the boundary of the SCPIR value range most close to the initial SCPIR, for example, if the lower boundary of boundaries of the SCPIR value range is most close to the initial SCPIR, then the determined target SCPIR can be greater than or equal to the lower boundary value of the SCPIR value range; if the upper boundary of the SCPIR value range is most close to the initial SCPIR, then the determined target SCPIR can be less than or equal to the lower boundary value of the SCPIR value range;
in step 312: the reference power values of the two users are corrected according to the target SCPIR (it is the uplink power value in the VAMOS uplink regular power control process);
in this step, the reference power values of the two VAMOS users can be corrected respectively according to the target SCPIR. In the preferable scheme, it can also adjust the reference power value of at least one VAMOS user therein according to the target SCPIR.
in step 313: it is judged whether the reference power values of the two VAMOS users exceed the corresponding uplink power thresholds respectively (that is, the set threshold corresponding to the VAMOS user); if yes, the reference power values of the VAMOS users are corrected again, until the corrected reference power values of two VAMOS users are both less than or equal to their own uplink power threshold, and step 314 is entered; otherwise step 314 is entered directly;
In step 314: the power adjusting step lengths of the two VAMOS users are determined respectively, and it is judged whether the power adjusting step lengths of the two VAMOS users exceed their own corresponding adjusting step length thresholds; if yes, then the power adjusting step lengths of the two VAMOS users are adjusted respectively to be less than or equal to the corresponding adjusting step length thresholds, and step 315 is entered; otherwise step 315 is entered directly;
in step 315, the power adjusting step lengths of their own uplink power values are notified respectively to two VAMOS users.

The process of the above-mentioned power control is illustrated combining the specific application scenario hereinafter.

Supposing that the user 1 and the user 2 are VAMOS multiplexing users, based on the GSM single user power control, and the single user power control is performed on the user 1 and user 2 respectively. The reference power value of the user 1 is output as $U_{1\_}\ Power\_\ ref_0$, and the reference power value of the user 2 is output as $U_2\_Power\_ref_0$.

Later the power ratio of the two users is adjusted by using the constraint condition of the SCPIR, to reach the required power. The realizations of the power control of the VAMOS uplink and downlink are basically similar. The downlink power control is mainly introduced as follows, and the uplink is introduced simply.

Wherein, the VAMOS downlink regular joint power control process is as follows:

in step 1: the initial SCPIR (that is, $SCPIR_{ini}$) of the user 1 and user 2 are calculated according to the following formula;

$$U_X\_PowerMax\_ref_0 = MAX\{U_1\_Power\_ref_0, U_2\_Power\_ref_0\}$$

$$U_X\_PowerMin\_ref_0 = MIN\{U_1\_Power\_ref_0, U_2\_Power\_ref_0\}$$

$$SCPIR_{ini} = 20\log\frac{U_x\_PowerMax\_ref_0}{U_x\_PowerMin\_ref_0}$$

It can be seen from the above-mentioned formula that, when the present application scenario is calculating the initial SCPIR of the user 1 and user 2, the initial SCPIR is made to be a positive value in order to make the calculation convenient, therefore the user with a greater reference power value is regarded as the numerator of the antilog part in the logarithm formula.

In step 2: in the present application scenario, it is judged that the initial SCPIR is out of the set SCPIR range, so the target SCPIR is determined (that is, $SCPIR_{output}$);

in the present application scenario, the set SCPIR range is a discrete SCPIR value set as follows:

$$SCPIR \in \{SCPIR_0, ..., SCPIR_i, SCPIR_{i+1}, ..., SCPIR_N\}$$

wherein, $SCPIR \in \{SCPIR_0, ..., SCPIR_i, SCPIR_{i+1}, ..., SCPIR_N\}$ if $SCPIR_i \leq SCPIR_{ini} < SCPIR_{i+1}$, then the target SCPIR is determined as:

$$SCPIR_{output} = SCPIR_i$$

in step 3: the reference power values of the two users are corrected according to the target SCPIR;

in this step, the reference power values of the two users can be corrected specifically according to the following formula:

$$U_X\_PowerMax\_ref_1 = U_X\_PowerMax\_ref_0$$

$$U_X\_PowerMin\_ref_1 = \frac{U_X\_PowerMax\_ref_0}{10^{\frac{SCPIR_{output}}{20}}}$$

in step 4: the total power and power adjusting step length of the two users are determined.

The total power of the two users (also called the total transmission power) is as follows:

$$PowerTotal\_ref_0 = U_X\_PowerMax\_ref_1 + U_X\_PowerMin\_ref_1$$

Since the original transmission power is known as $PowerTotal\_former,$ the power adjusting step length is as follows:

$$Step\_ref_0 = PowerTotal\_ref_0 - PowerTotal\_former$$

in step 5: it is judged whether the total power of the two users exceeds the set threshold; if yes, then the reference power values of the two users are corrected, in order to make the total power of the two users be less than or equal to the set threshold;

in step 6: the power adjusting step length is corrected;

wherein, if the threshold of BTS up-adjusting step length is *BTS_STEP_INC_THRED,*

the threshold of BTS down-adjusting step length is *BTS_STEP_ DEC_THRED,* then

if the calculated power adjusting step length *Step_ref*$_0 \geq 0$, then it represents up-adjusting, and the power adjusting step length after correction is:

$$Step\_ref_1 = MIN\{Step\_ref_0, BTS\_STEP\_INC\_THRED\}$$

if the calculated power adjusting step length *Step_ref*$_0 < 0$, then it represents down-adjusting, and the power adjusting step length after correction is:

$$Step\_ref_1 = -MIN\{-Step\_ref_0, BTS\_STEP\_DEC\_THRED\}$$

in step 7: the final power adjusting step length and the target SCPIR are output, that is, *Step_ref*$_1$ and *SCPIR*$_{output}$ are output.

The VAMOS uplink regular joint power control process is as follows:

in step 1: the initial SCPIR (that is, *SCPIR*$_{ini}$) is calculated.

The calculation of the step is same as the step 1 of the downlink regular power control.

In step 2: in the present application scenario, it is judged that the initial SCPIR is out of the set SCPIR range, so the target SCPIR is determined (that is, *SCPIR*$_{output}$);

in this step, if the set SCPIR range is *SCPIR_THRED,* since *SCPIR*$_{ini} > $ *SCPIR_Thred,* let *SCPIR*$_{ini} = $ *SCPIR_THRED,* that is, the lower boundary of the set SCPIR range is regarded as the target SCPIR.

In step 3: the reference power values of the two users are corrected according to the target SCPIR.

The operation of the step is same as the step 3 of the downlink regular power control;

wherein, supposing $U_1\_Power\_ref_0 \geq U_2\_Power\_ref_0$, then:

$$U_1\_Power\_ref_1 = U_X\_PowerMax\_ref_1 \qquad U_2\_Power\_ref_1 = U_X\_PowerMin\_ref_1$$

in step 4: the power adjusting step lengths of the two users are determined respectively according to the corrected reference power values of the two users;

the original transmission power of the two users are respectively known as $U_1\_Power\_former$ and $U_2\_Power\_former,$ then the reference power adjusting step lengths of the two users are respectively:

$$U_1\_Step\_ref_0 = U_1\_Power\_ref_0 - U_1\_Power\_former$$

$$U_2\_Step\_ref_0 = U_2\_Power\_ref_0 - U_2\_Power\_former$$

in step 5: the power adjusting step length is corrected;

for example, the threshold of the up-adjusting step length of a certain user is *MS_STEP_INC_THRED,*

the threshold of the down-adjusting step length is *MS_STEP_DEC_THRED* ;

if $U_X\_Step\_ref_0 \geq 0$, then it represents up-adjusting, and the power adjusting step length after correction is:

$$U_X\_Step\_ref_1 = MIN\{U_X\_Step\_ref_0, MS\_STEP\_INC\_THRED\}$$

if *Step_ref*$_0 < 0$, then it represents down-adjusting, and the power adjusting step length after correction is:

$$U_X\_Step\_ref_1 = -MIN\{-U_X\_Step\_ref_0, MS\_STEP\_DEC\_THRED\}$$

in step 6: the final power adjusting step length is respectively notified to the two users;
in this step, the power control information $U_x\_Step\_ref_1$ is notified to the user in the downlink SACCH.

The above-disclosed is only embodiment of the present invention, however, the present invention is not limited herein, and any changes considered by those skilled in the art should all fall into the protection scope of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

Industrial Applicability

The technical scheme of the present invention jointly considers the power demand influencing the multiplexing users and makes the total power as low as possible, and the power of each user can guarantee that both users can work normally, and the power ratio of the two users is adjusted according to the real-time communication state of the user, which optimizes the performance of the whole system.

## Claims

1.   A method for joint power control in multi-user multiplexing technology comprising:

according to reference power values of two Voice services over Adaptive Multi-user channels on One Slot, VAMOS, users, determining an initial power ratio, SCPIR, value of the two VAMOS users; if the initial SCPIR value is out of a set SCPIR range (201, 202, 203, 210, 211, 212) then adjusting the reference power value of at least one VAMOS user in the two VAMOS users so that a SCPIR value of the two VAMOS users after adjustment is in the set SCPIR range (204), wherein the reference power value of the VAMOS user is determined according to a single user power control method;
wherein, the joint power control comprises downlink initial joint power control, downlink regular joint power control, uplink initial joint power control and uplink regular joint power control;
when performing the downlink initial joint power control and the downlink regular joint power control, and when the SCPIR value of the two VAMOS users after adjustment is in the set SCPIR range, the method further comprises: if judging that a total power of the two VAMOS users after adjustment exceeds a set value (205, 206), then adjusting the reference power values of the two VAMOS users again, until the total power of the two VAMOS users after adjustment is less than or equal to the set value and the SCPIR value of the two VAMOS users is in the set SCPIR range (207, 208); wherein, when performing the downlink regular joint power control, and when the total power of the two VAMOS users after adjustment is less than or equal to the set value and the SCPIR value of the two VAMOS users is in the set SCPIR range, the method further comprises: if judging that a power adjusting step length of the VAMOS user exceeds a power adjusting step length threshold (211, 212, 213), then adjusting the reference power values of the two VAMOS users again, until the total power of the two VAMOS users after adjustment is less than or equal to the set value and the power adjusting step length of the VAMOS user is less than or equal to the power adjusting step length threshold, and the SCPIR value of the two VAMOS users is in the set SCPIR range (214, 215, 216).

2.   The method according to claim 1, wherein,
when performing the downlink initial joint power control and the downlink regular joint power control, the set SCPIR range is a continuous SCPIR value range, or a discrete SCPIR value set;
when the set SCPIR range is the discrete SCPIR value set, making the SCPIR value of the two VAMOS users after adjustment be in the set SCPIR range refers to:

making the SCPIR value of the two VAMOS users after adjustment equal a SCPIR value most close to the initial SCPIR value in the discrete SCPIR value set.

3. The method according to claim 1, wherein,
when performing the uplink initial joint power control and the uplink regular joint power control, and when the SCPIR value of the two VAMOS users after adjustment is in the set SCPIR range, the method further comprises: if judging that the reference power value of any one VAMOS user in the two VAMOS users after adjustment exceeds a set value corresponding to the VAMOS user, then adjusting the reference power values of the two VAMOS users again, until the adjusted reference power values of two VAMOS users are respectively less than or equal to corresponding set values and the SCPIR value of the two VAMOS users is in the set SCPIR range.

4. The method according to claim 3, wherein,
when performing the uplink regular joint power control, and when the adjusted reference power values of the two VAMOS users are less than or equal to the corresponding set values and the SCPIR value of the two VAMOS users belongs to the set SCPIR range, the method further comprises: judging whether power adjusting step lengths of the two VAMOS users after adjusting power exceed corresponding power adjusting step length thresholds, when the power adjusting step length of any one VAMOS user exceeds the power adjusting step length threshold corresponding to the user, then adjusting the reference power values of the two VAMOS users again, so that the adjusted reference power values of the two VAMOS users are respectively less than or equal to the corresponding set values, and the power adjusting step lengths of the two VAMOS users are respectively less than or equal to the corresponding power adjusting step length thresholds, and the SCPIR value of the two VAMOS users is in the set SCPIR range.

5. The method according to claim 3 or 4, wherein,
when performing the uplink initial joint power control and the uplink regular joint power control, the set SCPIR range is a continuous SCPIR value range.

6. An apparatus for joint power control in multi-user multiplexing technology, comprising a calculation unit and a processing unit, wherein:

   the calculation unit is configured to: according to reference power values of two Voice services over Adaptive Multi-user channels on One Slot, VAMOS, users, determine an initial power ratio, SCPIR, value of the two VAMOS users; wherein the reference power value of the VAMOS user is determined according to a single user power control method;
   the processing unit is configured to: judge whether the initial SCPIR value is out of a set SCPIR range, and if the initial SCPIR value is out of the set SCPIR range, adjust the reference power value of at least one VAMOS user in the two VAMOS users so that a SCPIR value of the two VAMOS users after adjustment is in the set SCPIR range;
   the calculation unit is configured to: determine the initial SCPIR value of the two VAMOS users in a downlink initial joint power control process, a downlink regular joint power control process, an uplink initial joint power control process and an uplink regular joint power control process;
   in the downlink initial joint power control process and the downlink regular joint power control process, and when the SCPIR value of the two VAMOS users after adjustment is in the set SCPIR range, judge whether a total power of the two VAMOS users after adjustment exceeds a set value, and if exceeding the set value, adjust the reference power values of the two VAMOS users again, until the total power of the two VAMOS users after adjustment is less than or equal to the set value and the SCPIR value of the two VAMOS users is in the set SCPIR range; wherein, in the downlink regular joint power control process, and when the total power of the two VAMOS users after adjustment is less than or equal to the set value and the SCPIR value of the two VAMOS users belongs to the set SCPIR range, judge whether a power adjusting step length of the VAMOS user exceeds a power adjusting step length threshold, and when the power adjusting step length of the VAMOS user exceeds the power adjusting step length threshold, adjust the reference power values of the two VAMOS users again, until the total power of the two VAMOS users after adjustment is less than or equal to the set value and the power adjusting step length of the VAMOS user is less than or equal to the power adjusting step length threshold, and the SCPIR value of the two VAMOS users is in the set SCPIR range.

7. The apparatus according to claim 6, wherein,
the processing unit is further configured to: in the downlink initial joint power control process and the downlink regular joint power control process, set a SCPIR range as a continuous SCPIR value range, or a discrete SCPIR value set; in the uplink initial joint power control process and the uplink regular joint power control process, set the SCPIR range as the continuous SCPIR value range.

8. The apparatus according to claim 7, wherein,
when the set SCPIR range is the discrete SCPIR value set, the processing unit is configured to: if the initial SCPIR value is out of the set SCPIR range, adjust the reference power value of at least one VAMOS user in the two VAMOS users so that the SCPIR value of the two VAMOS users after adjustment equals a SCPIR value most close to the initial SCPIR value in the discrete SCPIR value set.

9. The apparatus according to any one of claims 6 to 8, wherein the processing unit is further configured to:

in the uplink initial joint power control process and the uplink regular joint power control process, and when the SCPIR value of the two VAMOS users after adjustment is in the set SCPIR range, judge respectively whether the reference power values of the two VAMOS users after adjustment exceed corresponding set values, and if the reference power value of any one VAMOS user exceeds a set value corresponding to the VAMOS user, adjust the reference power values of the two VAMOS users again, until the adjusted reference power values of the two VAMOS users are respectively less than or equal to corresponding set values and the SCPIR value of the two VAMOS users is in the set SCPIR range.

10. The apparatus according to claim 9, wherein, the processing unit is further configured to:

in the uplink regular joint power control process, and when the total power of the two VAMOS users after adjustment is less than or equal to the set value and the SCPIR value of the two VAMOS users is in the set SCPIR range, respectively judge whether the power adjusting step lengths of the two VAMOS users exceed corresponding power adjusting step length thresholds, and when the power adjusting step length of any one VAMOS user exceeds the power adjusting step length threshold corresponding to the user, adjust the reference power values of the two VAMOS users again, until the adjusted reference power values of the two VAMOS users are respectively less than or equal to the corresponding set values, and the power adjusting step lengths of the two VAMOS users are respectively less than or equal to the corresponding power adjusting step length thresholds, and the SCPIR value of the two VAMOS users is in the set SCPIR range.

**Patentansprüche**

1. Verfahren zur gemeinsamen Leistungssteuerung in einer Mehrnutzer-Multiplextechnologie, das Folgendes umfasst:

gemäß Referenzleistungswerten zweier Voice services over Adaptive Multi-user channels on One Slot (VAMOS)-Nutzer, Bestimmen eines anfänglichen Leistungsverhältnisses (SCPIR)-Wertes der beiden VAMOS-Nutzer; falls der anfängliche SCPIR-Wert außerhalb eines eingestellten SCPIR-Bereich liegt (201, 202, 203, 210, 211, 212), dann Justieren des Referenzleistungswertes mindestens eines VAMOS-Nutzers der beiden VAMOS-Nutzer so, dass ein SCPIR-Wert der beiden VAMOS-Nutzer nach der Justierung innerhalb des SCPIR-Bereichs liegt (204), wobei der Referenzleistungswert des VAMOS-Nutzers gemäß einem Einzelnutzer-Leistungssteuerungsverfahren bestimmt wird;
wobei die gemeinsame Leistungssteuerung eine anfängliche gemeinsame Downlink-Leistungssteuerung, eine reguläre gemeinsame Downlink-Leistungssteuerung, eine anfängliche gemeinsame Uplink-Leistungssteuerung und eine reguläre gemeinsame Uplink-Leistungssteuerung umfasst;
wobei, wenn die anfängliche gemeinsame Downlink-Leistungssteuerung und die reguläre gemeinsame Downlink-Leistungssteuerung ausgeführt werden, und wenn der SCPIR-Wert der beiden VAMOS-Nutzer nach der Justierung innerhalb des SCPIR-Bereichs liegt, das Verfahren des Weiteren Folgendes umfasst: falls beurteilt wird, dass eine Gesamtleistung der beiden VAMOS-Nutzer nach der Justierung einen eingestellten Wert überschreitet (205, 206), dann erneutes Justieren der Referenzleistungswerte der beiden VAMOS-Nutzer, bis die Gesamtleistung der beiden VAMOS-Nutzer nach der Justierung nicht größer ist als der eingestellte Wert und der SCPIR-Wert der beiden VAMOS-Nutzer innerhalb des SCPIR-Bereichs liegt (207, 208);
wobei,
wenn die reguläre gemeinsame Downlink-Leistungssteuerung ausgeführt wird, und wenn die Gesamtleistung der beiden VAMOS-Nutzer nach der Justierung nicht größer ist als der eingestellte Wert und der SCPIR-Wert der beiden VAMOS-Nutzer innerhalb des SCPIR-Bereichs liegt, das Verfahren des Weiteren Folgendes umfasst: falls beurteilt wird, dass eine Leistungsjustierungsschrittlänge des VAMOS-Nutzers eine Leistungsjustierungsschrittlängenschwelle übersteigt (211, 212, 213), dann erneutes Justieren der Referenzleistungswerte der beiden VAMOS-Nutzer, bis die Gesamtleistung der beiden VAMOS-Nutzer nach der Justierung nicht größer ist als der eingestellte Wert und die Leistungsjustierungsschrittlänge des VAMOS-Nutzers nicht größer ist als die Leistungsjustierungsschrittlängenschwelle, und der SCPIR-Wert der beiden VAMOS-Nutzer innerhalb des SCPIR-Bereichs liegt (214, 215, 216).

2. Verfahren nach Anspruch 1, wobei,
wenn die anfängliche gemeinsame Downlink-Leistungssteuerung und die reguläre gemeinsame Downlink-Leistungssteuerung ausgeführt werden, der eingestellte SCPIR-Bereich ein durchgehender SCPIR-Wertebereich oder ein diskreter SCPIR-Wertesatz ist;
wenn der eingestellte SCPIR-Bereich der diskrete SCPIR-Wertesatz ist, das Veranlassen, dass der SCPIR-Wert der beiden VAMOS-Nutzer nach der Justierung in dem eingestellten SCPIR-Bereich liegt, Folgendes meint:

Veranlassen, dass der SCPIR-Wert der beiden VAMOS-Nutzer nach der Justierung gleich einem SCPIR-Wert wird, der dem anfänglichen SCPIR-Wert in dem diskreten SCPIR-Wertesatz am nächsten liegt.

3. Verfahren nach Anspruch 1, wobei,
wenn die anfängliche gemeinsame Uplink-Leistungssteuerung und die reguläre gemeinsame Uplink-Leistungssteuerung ausgeführt werden, und wenn der SCPIR-Wert der beiden VAMOS-Nutzer nach der Justierung innerhalb des SCPIR-Bereichs liegt, das Verfahren des Weiteren Folgendes umfasst: falls beurteilt wird, dass der Referenzleistungswert eines VAMOS-Nutzers der beiden VAMOS-Nutzer nach der Justierung einen eingestellten Wert überschreitet, der dem VAMOS-Nutzer entspricht, dann erneutes Justieren der Referenzleistungswerte der beiden VAMOS-Nutzer, bis die justierten Referenzleistungswerte zweier VAMOS-Nutzer jeweils nicht größer sind als entsprechende eingestellte Werte und der SCPIR-Wert der beiden VAMOS-Nutzer innerhalb des SCPIR-Bereichs liegt.

4. Verfahren nach Anspruch 3, wobei,
wenn die reguläre gemeinsame Uplink-Leistungssteuerung ausgeführt wird, und wenn die justierten Referenzleistungswerte der beiden VAMOS-Nutzer nicht größer sind als die entsprechenden eingestellten Werte und der SCPIR-Wert der beiden VAMOS-Nutzer zu dem eingestellten SCPIR-Bereich gehört, das Verfahren des Weiteren Folgendes umfasst: Beurteilen, ob Leistungsjustierungsschrittlängen der beiden VAMOS-Nutzer nach dem Justieren der Leistung entsprechende Leistungsjustierungsschrittlängenschwellen übersteigen, wenn die Leistungsjustierungsschrittlänge eines der VAMOS-Nutzer die Leistungsjustierungsschrittlängenschwelle übersteigt, die dem Nutzer entspricht, dann erneutes Justieren der Referenzleistungswerte der beiden VAMOS-Nutzer, so dass die justierten Referenzleistungswerte der beiden VAMOS-Nutzer jeweils nicht größer sind als die entsprechenden eingestellten Werte, und die Leistungsjustierungsschrittlängen der beiden VAMOS-Nutzer jeweils nicht größer sind als die entsprechenden Leistungsjustierungsschrittlängenschwellen, und der SCPIR-Wert der beiden VAMOS-Nutzer innerhalb des SCPIR-Bereichs liegt.

5. Verfahren nach Anspruch 3 oder 4, wobei,
wenn die anfängliche gemeinsame Uplink-Leistungssteuerung und die reguläre gemeinsame Uplink-Leistungssteuerung ausgeführt werden, der eingestellte SCPIR-Bereich ein durchgehender SCPIR-Wertebereich ist.

6. Vorrichtung zur gemeinsamen Leistungssteuerung in einer Mehrnutzer-Multiplextechnologie, die eine Berechnungseinheit und eine Verarbeitungseinheit umfasst, wobei:

die Berechnungseinheit für Folgendes konfiguriert ist: gemäß Referenzleistungswerten zweier Voice services over Adaptive Multi-user channels on One Slot (VAMOS)-Nutzer, Bestimmen eines anfänglichen Leistungsverhältnis (SCPIR)-Wertes der beiden VAMOS-Nutzer; wobei der Referenzleistungswert des VAMOS-Nutzers gemäß einem Einzelnutzer-Leistungssteuerungsverfahren bestimmt wird;
die Verarbeitungseinheit für Folgendes konfiguriert ist: Beurteilen, ob der anfängliche SCPIR-Wert außerhalb eines eingestellten SCPIR-Bereichs liegt, und falls der anfängliche SCPIR-Wert außerhalb des eingestellten SCPIR-Bereichs liegt, Justieren des Referenzleistungswertes mindestens eines VAMOS-Nutzers der beiden VAMOS-Nutzer so, dass ein SCPIR-Wert der beiden VAMOS-Nutzer nach der Justierung innerhalb des SCPIR-Bereichs liegt;
die Berechnungseinheit für Folgendes konfiguriert ist: Bestimmen des anfänglichen SCPIR-Wertes der beiden VAMOS-Nutzer in einem anfänglichen gemeinsame Downlink-Leistungssteuerungsprozess, einem regulären gemeinsamen Downlink-Leistungssteuerungsprozess, einem anfänglichen gemeinsamen Uplink-Leistungssteuerungsprozess und einem regulären gemeinsamen Uplink-Leistungssteuerungsprozess;
in dem anfänglichen gemeinsamen Downlink-Leistungssteuerungsprozess und dem regulären gemeinsamen Downlink-Leistungssteuerungsprozess, und wenn der SCPIR-Wert der beiden VAMOS-Nutzer nach der Justierung innerhalb des SCPIR-Bereichs liegt, Beurteilen, ob eine Gesamtleistung der beiden VAMOS-Nutzer nach der Justierung einen eingestellten Wert überschreitet, und falls der eingestellte Wert überschritten wird, erneutes Justieren der Referenzleistungswerte der beiden VAMOS-Nutzer, bis die Gesamtleistung der beiden VAMOS-Nutzer nach der Justierung nicht größer ist als der eingestellte Wert und der SCPIR-Wert der beiden VAMOS-Nutzer innerhalb des SCPIR-Bereichs liegt;
wobei
in dem regulären gemeinsamen Downlink-Leistungssteuerungsprozess, und wenn die Gesamtleistung der beiden VAMOS-Nutzer nach der Justierung nicht größer ist als der eingestellte Wert und der SCPIR-Wert der beiden VAMOS-Nutzer zu dem eingestellten SCPIR-Bereich gehört, beurteilt wird, ob eine Leistungsjustierungsschrittlänge des VAMOS-Nutzers eine Leistungsjustierungsschrittlängenschwelle übersteigt, und wenn die Leistungsjustierungsschrittlänge des VAMOS-Nutzers die Leistungsjustierungsschrittlängenschwelle übersteigt, die Referenzleistungswerte der beiden VAMOS-Nutzer erneut justiert werden, bis die Gesamtleistung der beiden VAMOS-Nutzer nach der Justierung nicht größer ist als der eingestellte Wert und die Leistungsjustierungsschrittlänge des VAMOS-Nutzers nicht größer ist als die Leistungsjustierungsschrittlängenschwelle, und der SCPIR-Wert der beiden VAMOS-Nutzer innerhalb des SCPIR-Bereichs liegt.

7. Vorrichtung nach Anspruch 6, wobei
die Verarbeitungseinheit des Weiteren für Folgendes konfiguriert ist: in dem anfänglichen gemeinsamen Downlink-Leistungssteuerungsprozess und dem regulären gemeinsamen Downlink-Leistungssteuerungsprozess, Einstellen eines SCPIR-Bereichs als einen durchgehenden SCPIR-Wertebereich oder einen diskreten SCPIR-Wertesatz; und in dem anfänglichen gemeinsamen Uplink-Leistungssteuerungsprozess und dem regulären gemeinsamen Uplink-Leistungssteuerungsprozess, Einstellen des SCPIR-Bereichs als den durchgehenden SCPIR-Wertebereich.

8. Vorrichtung nach Anspruch 7, wobei,
wenn der eingestellte SCPIR-Bereich der diskrete SCPIR-Wertesatz ist, die Verarbeitungseinheit für Folgendes konfiguriert ist: falls der anfängliche SCPIR-Wert außerhalb des eingestellten SCPIR-Bereichs liegt, Justieren des Referenzleistungswertes mindestens eines VAMOS-Nutzers der beiden VAMOS-Nutzer so, dass der SCPIR-Wert der beiden VAMOS-Nutzer nach der Justierung gleich einem SCPIR-Wert wird, der dem anfänglichen SCPIR-Wert in dem diskreten SCPIR-Wertesatz am nächsten liegt.

9. Vorrichtung nach einem der Ansprüche 6 bis 8, wobei die Verarbeitungseinheit des Weiteren für Folgendes konfiguriert ist:

in dem anfänglichen gemeinsamen Uplink-Leistungssteuerungsprozess und dem regulären gemeinsamen Uplink-Leistungssteuerungsprozess, und wenn der SCPIR-Wert der beiden VAMOS-Nutzer nach der Justierung innerhalb des SCPIR-Bereichs liegt, jeweils Beurteilen, ob die Referenzleistungswerte der beiden VAMOS-Nutzer nach der Justierung entsprechende eingestellte Werte übersteigen, und falls der Referenzleistungswert eines der VAMOS-Nutzer einen eingestellten Wert überschreitet, der dem VAMOS-Nutzer entspricht, erneutes Justieren der Referenzleistungswerte der beiden VAMOS-Nutzer, bis die justierten Referenzleistungswerte der beiden VAMOS-Nutzer jeweils nicht größer sind als entsprechende eingestellte Werte und der SCPIR-Wert der beiden VAMOS-Nutzer innerhalb des SCPIR-Bereichs liegt.

10. Vorrichtung nach Anspruch 9, wobei die Verarbeitungseinheit des Weiteren für Folgendes konfiguriert ist:

in dem regulären gemeinsamen Uplink-Leistungssteuerungsprozess, und wenn die Gesamtleistung der beiden VAMOS-Nutzer nach der Justierung nicht größer ist als der eingestellte Wert und der SCPIR-Wert der beiden VAMOS-Nutzer innerhalb des SCPIR-Bereichs liegt, jeweils Beurteilen, ob die Leistungsjustierungsschrittlängen der beiden VAMOS-Nutzer entsprechende Leistungsjustierungsschrittlängenschwellen übersteigen, und wenn die Leistungsjustierungsschrittlänge eines der VAMOS-Nutzer die Leistungsjustierungsschrittlängenschwelle übersteigt, die dem Nutzer entspricht, erneutes Justieren der Referenzleistungswerte der beiden VAMOS-Nutzer, bis die justierten Referenzleistungswerte der beiden VAMOS-Nutzer jeweils nicht größer sind als die entsprechenden eingestellten Werte, und die Leistungsjustierungsschrittlängen der beiden VAMOS-Nutzer jeweils nicht größer sind als die entsprechenden Leistungsjustierungsschrittlängenschwellen, und der SCPIR-Wert der beiden VAMOS-Nutzer innerhalb des SCPIR-Bereichs liegt.

**Revendications**

1. Procédé de régulation de puissance commune dans une technologie de multiplexage à utilisateurs multiples comprenant :

en fonction de valeurs de puissance de référence de deux utilisateurs de services vocaux sur canaux adaptatifs à utilisateurs multiples dans un créneau, VAMOS, la détermination d'une valeur de rapport de puissance, SCPIR, initiale des deux utilisateurs VAMOS ; si la valeur SCPIR initiale se trouve à l'extérieur d'une plage SCPIR de consigne (201, 202, 203, 210, 211, 212), alors l'ajustement de la valeur de puissance de référence d'au moins un utilisateur VAMOS parmi les deux utilisateurs VAMOS de sorte qu'une valeur SCPIR des deux utilisateurs VAMOS après l'ajustement se trouve dans la plage SCPIR de consigne (204), dans lequel la valeur de puissance de référence de l'utilisateur VAMOS est déterminée selon un procédé de régulation de puissance d'utilisateur unique ;
dans lequel la régulation de puissance commune comprend une régulation de puissance commune initiale de liaison descendante, une régulation de puissance commune régulière de liaison descendante, une régulation de puissance commune initiale de liaison montante et une régulation de puissance commune régulière de liaison montante ;
lors de l'exécution de la régulation de puissance commune initiale de liaison descendante et de la régulation de puissance commune régulière de liaison descendante, et lorsque la valeur SCPIR des deux utilisateurs VAMOS après l'ajustement se trouve dans la plage SCPIR de consigne, le procédé comprend en outre : s'il est jugé qu'une puissance totale des deux utilisateurs VAMOS après l'ajustement dépasse une valeur de consigne (205, 206), alors l'ajustement des valeurs de puissance de référence des deux utilisateurs VAMOS à nouveau, jusqu'à ce que la puissance totale des deux utilisateurs VAMOS après l'ajustement soit inférieure ou égale à la valeur de consigne et la valeur SCPIR des deux utilisateurs VAMOS se trouve dans la plage SCPIR de consigne (207, 208) ;
dans lequel, lors de l'exécution de la régulation de puissance commune régulière de liaison descendante, et lorsque la puissance totale des deux utilisateurs VAMOS après l'ajustement est inférieure ou égale à la valeur de consigne et la valeur SCPIR des deux utilisateurs VAMOS se trouve dans la plage SCPIR de consigne, le procédé comprend en outre : s'il est jugé qu'une longueur d'étape d'ajustement de puissance de l'utilisateur VAMOS dépasse un seuil de longueur d'étape d'ajustement de puissance (211,212, 213), alors l'ajustement des valeurs de puissance de référence des deux utilisateurs VAMOS à nouveau, jusqu'à ce que la puissance totale des deux utilisateurs VAMOS après l'ajustement soit inférieure ou égale à la valeur de consigne et la longueur d'étape d'ajustement de puissance de l'utilisateur VAMOS soit inférieure ou égale au seuil de longueur d'étape d'ajustement de puissance, et la valeur SCPIR des deux utilisateurs VAMOS se trouve dans la plage SCPIR de consigne (214, 215, 216).

2. Procédé selon la revendication 1, dans lequel
lors de l'exécution de la régulation de puissance commune initiale de liaison descendante et de la régulation de puissance commune régulière de liaison descendante, la plage SCPIR de consigne est une plage de valeurs SCPIR continues, ou un ensemble de valeurs SCPIR discrètes ;
lorsque la plage SCPIR de consigne est l'ensemble de valeurs SCPIR discrètes, faire en sorte que la valeur SCPIR des deux utilisateurs VAMOS après l'ajustement soit dans la plage SCPIR de consigne fait référence à :

faire en sorte que la valeur SCPIR des deux utilisateurs VAMOS après l'ajustement soit égale à une valeur SCPIR la plus proche de la valeur SCPIR initiale dans l'ensemble de valeurs SCPIR discrètes.

3. Procédé selon la revendication 1, dans lequel
lors de l'exécution de la régulation de puissance commune initiale de liaison descendante, et lorsque la valeur SCPIR des deux utilisateurs VAMOS après l'ajustement se trouve dans la plage SCPIR de consigne, le procédé comprend en outre : s'il est jugé que la valeur de puissance de référence d'un utilisateur VAMOS parmi les deux utilisateurs VAMOS après l'ajustement dépasse une valeur de consigne correspondant à l'utilisateur VAMOS, alors l'ajustement des valeurs de puissance de référence des deux utilisateurs VAMOS à nouveau, jusqu'à ce que les valeurs de puissance de référence ajustées des deux utilisateurs VAMOS soient respectivement inférieures ou égales aux valeurs de consigne correspondantes et la valeur SCPIR des deux utilisateurs VAMOS se trouve dans la plage SCPIR de consigne.

4. Procédé selon la revendication 3, dans lequel
lors de l'exécution de la régulation de puissance commune régulière de liaison montante, et lorsque les valeurs de puissance de référence ajustées des deux utilisateurs VAMOS sont inférieures ou égales aux valeurs de consigne correspondantes et la valeur SCPIR des deux utilisateurs VAMOS se trouve dans la plage SCPIR de consigne, le procédé comprend en outre : le jugement que des longueurs d'étape d'ajustement de puissance des deux utilisateurs VAMOS après l'ajustement de puissance dépasse des seuils de longueur d'étape d'ajustement de puissance correspondants, lorsque la longueur d'étape d'ajustement de puissance d'un utilisateur VAMOS dépasse le seuil de longueur d'étape d'ajustement de puissance correspondant à l'utilisateur, puis l'ajustement des valeurs de puissance de référence des deux utilisateurs VAMOS à nouveau, de sorte que les valeurs de puissance de référence ajustées des deux utilisateurs VAMOS soient respectivement inférieures ou égales aux valeurs de consigne correspondantes, et les longueurs d'étape d'ajustement de puissance des deux utilisateurs VAMOS soient respectivement inférieures ou égales aux seuils de longueur d'étape d'ajustement de puissance correspondants, et la valeur SCPIR des deux utilisateurs VAMOS se trouve dans la plage SCPIR de consigne.

5. Procédé selon la revendication 3 ou 4, dans lequel
lors de l'exécution de la régulation de puissance commune initiale de liaison montante et de la régulation de puissance commune régulière de liaison montante, la plage SCPIR de consigne est une plage de valeurs SCPIR continues.

6. Appareil de régulation de puissance commune dans une technologie de multiplexage à utilisateurs multiples, comprenant une unité de calcul et une unité de traitement, dans lequel :

l'unité de calcul est configurée pour effectuer : en fonction de valeurs de puissance de référence de deux utilisateurs de services vocaux sur canaux adaptatifs à utilisateurs multiples dans un créneau, VAMOS, la détermination d'une valeur de rapport de puissance, SCPIR, initiale des deux utilisateurs VAMOS ; dans lequel la valeur de puissance de référence de l'utilisateur VAMOS est déterminée selon un procédé de régulation de puissance d'utilisateur unique ;

l'unité de traitement est configurée pour effectuer : le jugement si la valeur SCPIR initiale se trouve à l'extérieur d'une plage SCPIR de consigne, et si la valeur SCPIR initiale se trouve à l'extérieur de la plage SCPIR de consigne, l'ajustement de la valeur de puissance de référence d'au moins un utilisateur VAMOS parmi les deux utilisateurs VAMOS de sorte qu'une valeur SCPIR des deux utilisateurs VAMOS après l'ajustement se trouve dans la plage SCPIR de consigne ;

l'unité de calcul est configurée pour effectuer : la détermination de la valeur SCPIR initiale des deux utilisateurs VAMOS dans un processus de régulation de puissance commune initiale de liaison descendante, dans un processus de régulation de puissance commune régulière de liaison descendante, dans un processus de régulation de puissance commune initiale de liaison montante et dans un processus de régulation de puissance commune régulière de liaison montante ;

dans le processus de régulation de puissance commune initiale de liaison descendante et dans le processus de régulation de puissance commune régulière de liaison descendante, et lorsque la valeur SCPIR des deux utilisateurs VAMOS après l'ajustement se trouve dans la plage SCPIR de consigne, le jugement si une puissance totale des deux utilisateurs VAMOS après l'ajustement dépasse une valeur de consigne, et si la valeur de consigne est dépassée, l'ajustement des valeurs de puissance de référence des deux utilisateurs VAMOS à nouveau, jusqu'à ce que la puissance totale des deux utilisateurs VAMOS après l'ajustement soit inférieure ou égale à la valeur de consigne et la valeur SCPIR des deux utilisateurs VAMOS se trouve dans la plage SCPIR de consigne ;

dans lequel, dans le processus de régulation de puissance commune régulière de liaison descendante, et lorsque la puissance totale des deux utilisateurs VAMOS après l'ajustement est inférieure ou égale à la valeur de consigne et la valeur SCPIR des deux utilisateurs VAMOS se trouve dans la plage SCPIR de consigne, le jugement si une longueur d'étape d'ajustement de puissance de l'utilisateur VAMOS dépasse un seuil de longueur d'étape d'ajustement de puissance, et lorsque la longueur d'étape d'ajustement de puissance de l'utilisateur VAMOS dépasse le seuil de longueur d'étape d'ajustement de puissance, l'ajustement des valeurs de puissance de référence des deux utilisateurs VAMOS à nouveau, jusqu'à ce que la puissance totale des deux utilisateurs VAMOS après l'ajustement soit inférieure ou égale à la valeur de consigne et la longueur d'étape d'ajustement de puissance de l'utilisateur VAMOS soit inférieure ou égale au seuil de longueur d'étape d'ajustement de puissance, et la valeur SCPIR des deux utilisateurs VAMOS se trouve dans la plage SCPIR de consigne.

7. Appareil selon la revendication 6, dans lequel
l'unité de traitement est en outre configurée pour effectuer : dans le processus de régulation de puissance commune initiale de liaison descendante et dans le processus de régulation de puissance commune régulière de liaison descendante, le réglage d'une plage SCPIR en tant qu'une plage de valeurs SCPIR continues, ou un ensemble de valeurs SCPIR discrètes ; dans le processus de régulation de puissance commune initiale de liaison montante et dans le processus de régulation de puissance commune régulière de liaison montante, le réglage de la plage SCPIR en tant que la plage de valeurs SCPIR continues.

8. Appareil selon la revendication 7, dans lequel
lorsque la plage SCPIR de consigne est l'ensemble de valeurs SCPIR discrètes, l'unité de traitement est configurée pour effectuer : si la valeur SCPIR initiale se trouve à l'extérieur de la plage SCPIR de consigne, l'ajustement de la valeur de puissance de référence d'au moins un utilisateur VAMOS parmi les deux utilisateurs VAMOS de sorte que la valeur SCPIR des deux utilisateurs VAMOS après l'ajustement soit égale à une valeur SCPIR la plus proche de la valeur SCPIR initiale dans l'ensemble de valeurs SCPIR discrètes.

9. Appareil selon l'une quelconque des revendications 6 à 8, dans lequel l'unité de traitement est en outre configurée pour effectuer :

dans le processus de régulation de puissance commune initiale de liaison descendante et dans le processus de régulation de puissance commune régulière de liaison montante, et lorsque la valeur SCPIR des deux utilisateurs VAMOS après l'ajustement se trouve dans la plage SCPIR de consigne, le jugement respectivement si les valeurs de puissance de référence des deux utilisateurs VAMOS après l'ajustement dépassent des valeurs de consigne correspondantes, et si la valeur de puissance de référence d'un utilisateur VAMOS dépasse une valeur de consigne correspondant à l'utilisateur VAMOS, l'ajustement des valeurs de puissance de référence des deux utilisateurs VAMOS à nouveau, jusqu'à ce que les valeurs de puissance de référence ajustées des deux utilisateurs VAMOS soient respectivement inférieures ou égales aux valeurs de consigne correspondantes et la valeur SCPIR des deux utilisateurs VAMOS se trouve dans la plage SCPIR de consigne.

10. Appareil selon la revendication 9, dans lequel l'unité de traitement est en outre configurée pour effectuer :

dans le processus de régulation de puissance commune régulière de liaison montante, et lorsque la puissance totale des deux utilisateurs VAMOS après l'ajustement est inférieure ou égale à la valeur de consigne et la valeur SCPIR des deux utilisateurs VAMOS se trouve dans la plage SCPIR de consigne, le jugement respectivement si les longueurs d'étape d'ajustement de puissance des deux utilisateurs VAMOS dépasse des seuils de longueur d'étape d'ajustement de puissance correspondants, et lorsque la longueur d'étape d'ajustement de puissance d'un utilisateur VAMOS dépasse le seuil de longueur d'étape d'ajustement de puissance correspondant à l'utilisateur, l'ajustement des valeurs de puissance de référence des deux utilisateurs VAMOS à nouveau, jusqu'à ce que les valeurs de puissance de référence ajustées des deux utilisateurs VAMOS soient respectivement inférieures ou égales aux valeurs de consigne correspondantes, et les longueurs d'étape d'ajustement de puissance des deux utilisateurs VAMOS soient respectivement inférieures ou égales aux seuils de longueur d'étape d'ajustement de puissance correspondants, et la valeur SCPIR des deux utilisateurs VAMOS se trouve dans la plage SCPIR de consigne.

ARFCN: 160
TS: 3
TSC: 0

BTS

ARFCN: 160
TS: 3
TSC: 5

ARFCN: 160
TS: 3
TSC: 5

ARFCN: 160
TS: 3
TSC: 0

MS1

MS2

FIG. 1

Start

Whether it is a service frame before receiving the first measurement report after multiplexing and switching —201

Yes

No

Reference power values of two VAMOS users are respectively obtained by using the open loop power control —202

The reference power values of two VAMOS users are obtained respectively by using the downlink basic power control —209

Calculating an initial SCPIR, judging whether the initial SCPIR exceeds the set SCPIR range —203

No

Yes

Calculating an initial SCPIR, judging whether the initial SCPIR exceeds the set SCPIR range —210

No

Yes

Determine the target SCPIR according to the initial SCPIR and set SCPIR range

Determine the target SCPIR according to the initial SCPIR and set SCPIR range

The reference power of two VAMOS users is adjusted according to target SCPIR —204

The reference power values of two VAMOS users are corrected according to the target SCPIR —211

The total power of two VAMOS users is determined —205

The total power and power adjusting step length of two VAMOS users are determined —212

Judging if the total power of two VAMOS users exceeds the set threshold —206

No

Yes

Judging if the power adjusting step length is reasonable —213

Yes

No

The power adjusting step length is corrected to be less than or equal to the adjusting step length threshold —214

The reference power of two VAMOS users is adjusted according to the target SCPIR and the set threshold of total power of two VAMOS users —207

Judging if the total power of two VAMOS users exceeds the set threshold —215

Yes

No

The reference power values of two VAMOS users are corrected respectively

The total power of two VAMOS users and the target SCPIR are output —208

The adjusting step length and SCPIR are output —216

End

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101583181 A